# EUROPEAN PATENT SPECIFICATION

(11) **EP 3 076 340 B1**
(45) Date of publication and mention of the grant of the patent: **10.10.2018**
(21) Application number: 16163590.9
(22) Date of filing: 01.04.2016
(51) Int. Cl.: G06K 19/07, G06K 19/077, G06K 19/073

(54) **MULTI-FREQUENCY TRANSPONDER**
MEHRFACHFREQUENZTRANSPONDER
TRANSPONDEUR MULTI-FRÉQUENCE

(30) Priority: 02.04.2015 EP 15162492
(43) Date of publication of application: 05.10.2016
(73) Proprietor: EM Microelectronic-Marin SA, 2074 Marin (CH)
(72) Inventor: Kolman, Jiri, 15200 Praha 5 (CZ); Kubis, Jan, 14800 Praha 4 (CZ); Springer, James J., Colorado Springs, CO 80906 (US)
(74) Representative: Honoré, Anne-Claire

(56) References cited:
- US-A1- 2012 206 243
- US-A1- 2013 135 104
- US-B2- 8 500 033

## Description

### TECHNICAL FIELD

The invention relates to the field of multi-frequency transponders, such as radio-frequency identification (RFID) transponders. More specifically, the present invention relates to memory arrangements of multi-frequency transponders. The invention also relates to a corresponding memory access method and to a computer program product.

### BACKGROUND OF THE INVENTION

Transponders are used for instance in RFID systems. In this description the term transponder is used to describe a device which transmits a signal in response to a received signal. Transponders may operate in one frequency only or they may use multiple frequencies. For example, US 7,091,860 discloses a RFID transponder capable of utilising multiple operating frequencies. An ultra-high frequency (UHF) may be used for data transmission, and another frequency, for instance a high frequency (HF), may be used for field penetration. UHF is the international telecommunication union (ITU) designation for radio frequencies in the range between 300 MHz and 3 GHz, also known as the decimetre band as the wavelengths range from one to ten decimetres. HF is the ITU designation for radio frequencies between 3 and 30 MHz. It is also known as the decametre band or decametre wave as its wavelengths range from one to ten decametres (ten to one hundred metres). Different communication protocols are typically applied for data to be sent and/or received in different frequencies. The multi-frequency RFID transponder according to US 7,091,860 may use one common memory for multiple operating frequencies. This solution usually allows minimising the chip area. This approach is also normally used for single protocol RFID tags, which thus contain only one instance of memory.

In the case of multi-frequency transponders, such as dual-frequency transponders, memory requirements are different for each communication protocol. For example, data sent and/or received by using a first communication protocol may need a larger memory space compared to the memory used by a second communication protocol. Also, performance, power consumption and timing requirements for the memories typically vary depending on the communication protocol. Thus, it becomes clear that having only one shared memory in multi-frequency transponders is not an optimal solution. If, on the other hand, two memories are used in a dual-frequency transponder for example, then currently it is not known how to access both memories by using only one communication protocol.

The patent US 8,500,033 B2 describes a transponder for an RFID system. The transponder includes UHF and LF and HF antennas linked to an electronic circuit, a charge storing device, a UHF RFID protocol engine, a DF RFID protocol engine, and shared memory for the two protocol engines. It is not defined a mapping information to access data items in two physical memories.

The patent application US 2012/0206243 A1 describes an RFID transponder, which includes a memory storage. The memory storage includes two portions with one-time programmable (OTP) memory and many-time programmable (MTP) memory in which the storage of information can be within the OTP and MTP memories. It does not depend on a protocol of communication for storing in both memories.

### SUMMARY OF THE INVENTION

It is an object of the present invention to overcome the problems identified above related to the memory arrangements in multi-frequency transponders.

According to a first aspect of the invention, there is provided a multi-frequency transponder as recited in claim 1.

The proposed new solution has the advantage that both memories can be accessed for the purpose of reading and/or writing by using only one communication protocol, i.e. one protocol for both memories. Also, the performance of the transponder, e.g. in terms of speed and sensitivity, can be optimised by having two memories because each memory can be optimised for the specific communication protocol. This also means that the overall power consumption of the transponder can be minimised. Furthermore, the proposed transponder allows a maximum memory space for data to be obtained.

According to a second aspect of the invention, there is provided a memory access method as recited in claim 13.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
Figure 1 is a block diagram showing a first embodiment of a dual-frequency RFID transponder according to one example of the present invention;
Figure 2 is a diagram illustrating the principle of doing memory mapping to an UHF logical memory map;
Figure 3 is a diagram showing in more detail the structure of the UHF logical memory map;
Figure 4 is a diagram illustrating the principle of doing memory mapping to an HF logical memory map;
Figure 5 is a flow chart illustrating an example of a memory access method for a dual-frequency transponder;
Figure 6 is a block diagram showing a second embodiment of a dual-frequency RFID transponder according to one example of the present invention; and
Figure 7 is a flow chart illustrating an example of a tamper monitoring method for a dual-frequency transponder.

### DETAILED DESCRIPTION OF EMBODIMENTS OF THE INVENTION

An embodiment of the present invention will now be described in detail with reference to the attached figures. The invention will be described in the context of a dual-frequency RFID transponder. However, the invention is not limited to RFID technology and the transponder according to the present invention could also use more than two frequencies for data communication. Identical or corresponding functional and structural elements which appear in the different drawings are assigned the same reference numerals.

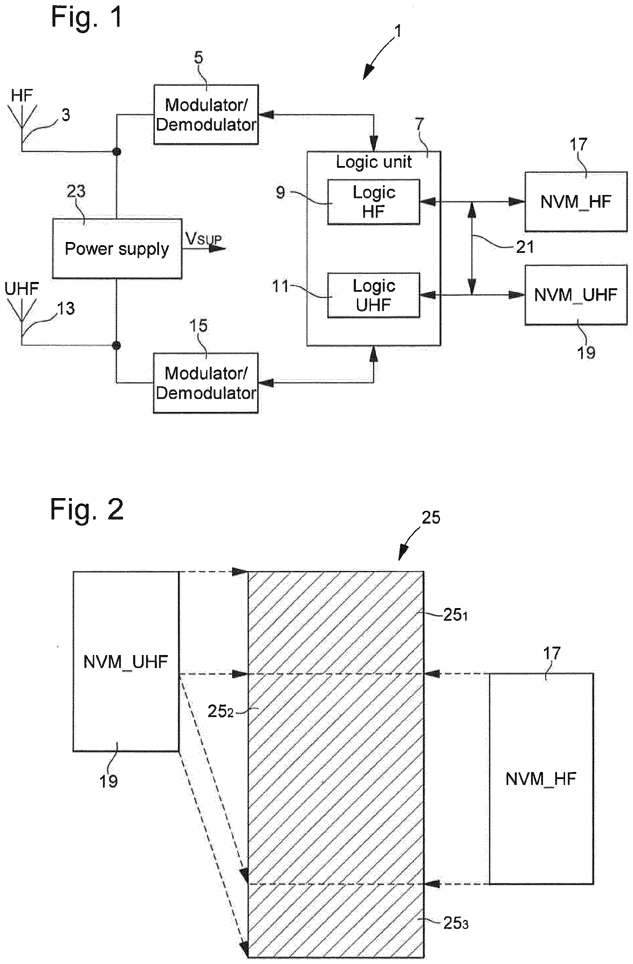

Figure 1 is a block diagram illustrating an exemplary dual-frequency RFID transponder 1, also known as an RFID tag, according to a first embodiment of the present invention. This transponder is arranged to communicate with an RFID interrogator, also known as an RFID reader. The transponder comprises a first antenna 3 arranged to operate at a first frequency. In this example the first frequency is a high frequency, which in this example is about 13.56 MHz. The first antenna 3 is arranged to receive and transmit telecommunication signals according to a first communication protocol. In this example the first communication protocol is a near field communication (NFC) protocol. NFC is a set of ideas and technology that enables devices to establish radio communication with each other by touching them together or bringing them into proximity, typically a distance of 10 cm or less. Each full NFC device can work in three modes: NFC target (acting like a credential), NFC initiator (as a reader) and NFC peer to peer. NFC uses electromagnetic induction between two loop antennas located within each other's near field, effectively forming an air-core transformer. It operates within the globally available and unlicensed radio frequency industrial, scientific and medical (ISM) of 13.56 MHz on ISO/IEC 18000-3 air interface and at rates ranging from 106 kbit/s to 848 kbit/s. NFC standards cover communication protocols and data exchange formats, and are based on existing RFID standards including ISO/IEC 14443 and FeliCa.

The first antenna 3 is connected to a first modulator/demodulator block 5 for modulating the data to be transmitted or for demodulating the data received. The modulator/demodulator block 5 is connected to a logic unit 7, also known as a control unit or decision unit, for processing the received demodulated data or the data to be transmitted. The logic unit 7 comprises a first control unit 9 and a second control unit 11. The first control unit 9 is arranged to process data related to the first communication protocol, while the second control unit 11 is arranged to process data related to a second communication protocol.

As can be seen, the transponder 1 also comprises a second antenna 13 and a second modulator/demodulator 15. The second antenna 13 is arranged to operate at a second frequency, different from the first frequency. In this example the second frequency is an ultra-high frequency and in this example is about 900 MHz. The second antenna 13 is arranged to receive and transmit wireless signals according to the second communication protocol. In this example the second communication protocol is the EPC Class-1 Generation-2 (Gen2). EPC Gen2 is one of the industrial standards for global RFID usage, and a core element of the EPCglobal Network, an architecture of open standards developed by the GS1 EPCglobal community. Currently used EPC Gen2 RFID tags also complies with ISO/IEC 18000-63, formerly ISO/IEC 18000-6 Type C, which is equivalent to EPC Gen2 for the RFID air interface standard. The signals according to this protocol are processed by the second logic unit 11. The first logic unit 9 is connected to a first non-volatile physical memory (NVM) 17, referred to hereinafter as an NVM_HF, and the second logic unit 11 is connected to a to a second NVM physical memory 19, referred to hereinafter as an NVM_HF. Physical memory is the memory hardware (normally random-access memory) installed in a computing device, such as a transponder. The term is used in contrast to virtual memory. The NVM_HF 17 is arranged to store data related to the first communication protocol, although other types of data may also be stored in that memory. The NVM_UHF 19 is arranged to store data related to the second communication protocol, although other types of data may also be stored in that memory. A memory bus 21 connects the NVM_HF 17 and the NVM_UHF 19. There is further shown a power supply 23 for providing electric power V_{SUP} to the transponder 1. Thus, in this example the transponder can be of an active type, but it could instead be a passive transponder, with no power supply, and by rectifying voltage from signals received by antenna 3 or antenna 13.

The performance (e.g. speed) of the RFID tag depends on the NVM memory, which needs to be accessed. This is due to the memory characteristics (e.g. power consumption, maximum/minimum timings), which are specific for each memory. The NVM_HF is typically larger in terms of number of bits that can be stored than the NVM_UHF. However, the performance of the NVM_HF is worse in both reading and writing data than NVM_UHF, and the power consumption of the NVM_HF is higher than the power consumption of the NVM_UHF. The NFC protocol using the HF and applications using that protocol normally use short-range communications and need maximum available memory space. Therefore, the NVM_HF is the ideal place for storing NFC data, in other words data from HF signals. On the other hand the EPC protocol using the UHF and applications using that protocol normally use long-range communications and require best-in-class sensitivity. Thus, the NVM_UHF is the ideal place for storing EPC data, in other words data from UHF signals. Both memories may also have different word lengths; e.g. 16 bits for EPC/UHF and 32 bits for NFC/HF. Thus, it can be concluded that the memory characteristics and the structure of these memories are different from each other.

The present invention is based on the idea that either one of the control units 9, 11 can access both memories NVM_HF 17, NVM_UHF 19. This is achieved in the present invention by performing memory mapping of both NVM_HF and NVM_HF to the same memory space of the transponder, referred to as a logical memory map. At least the data address information of the relevant data items in the physical memory are mapped or copied to a transponder mapping memory comprising the logical memory map, which is the memory space seen by the application. Thus, when accessing a data item in the physical memory, the logical memory is first seen by the application, whereby the logical memory acts as a pointer to the relevant data location in the physical memory. The logical memory is related to appropriate RFID protocol standards and conventions. The logical memory maps describe memory structures for each RFID communication protocol. Thus, the logical memory map contains at least address information according to the RFID protocol on how to access specific data entries located in the physical memory.

Figure 2 illustrates the memory mapping principle, when the EPC/UHF logical memory map 25 is used. As can be seen, in this example, the first part 25₁ of the memory map 25 is used by the NVM_UHF. The second part 25₂ of the memory map is used by the NVM_HF and the third part 25₃ of the memory map is again used by the NVM_UHF.

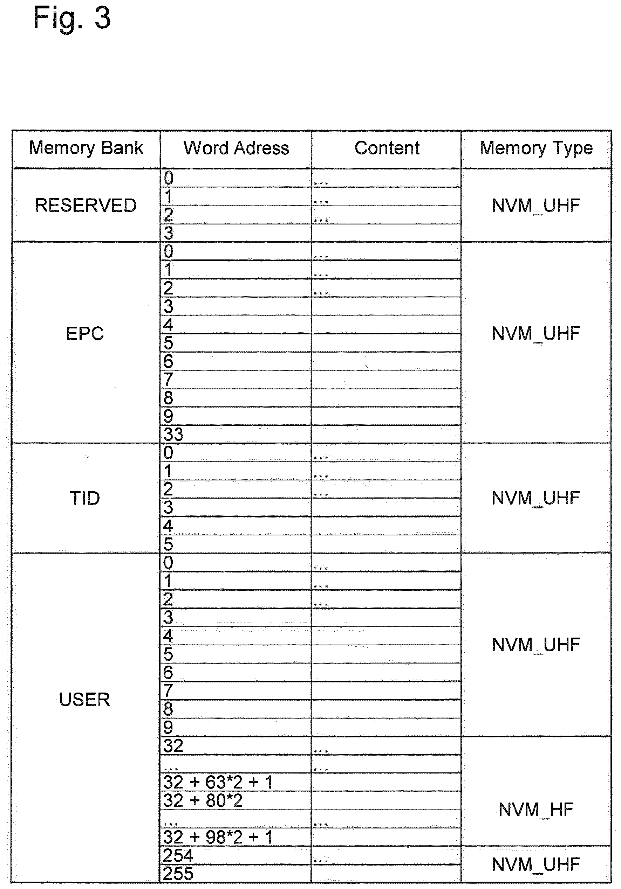

Figure 3 illustrates the memory mapping in more detail according to this example. The leftmost column indicates the memory bank. According to the EPC protocol which is used in the illustrated example, four memory bank items are defined: RESERVED, EPC, TID (tag ID) and USER. The second column indicates the word address, i.e. the location in the physical memory in order to access a specific data item. The EPC protocol calls data structures as words which are 16 bits long. The column called content indicates the content of the data item. The last column in the right indicates the memory type; in this example either NVM_UHF or NVM_HF. There are many possible ways of doing the memory mapping as long as the memory standards are not violated. In the case of the EPC/UHF memory map 25, the NVM_HF data is mapped typically to the USER memory bank segment of the memory map. In this example, the NVM_HF data occupies one continuous space around the middle of the memory space, while the NVM_UHF data occupies two segments in the memory space, each segment being separated by the NVM_HF data. The mapping of both of the NVM_HF and NVM_UHF data may be done in the continuous memory map space or the data can be interleaved from both physical memories. The performance and timing of reading and writing data in the physical memory depends on the physical memory, where the data is stored and possibly also on the exact location in that memory, where the data is being stored.

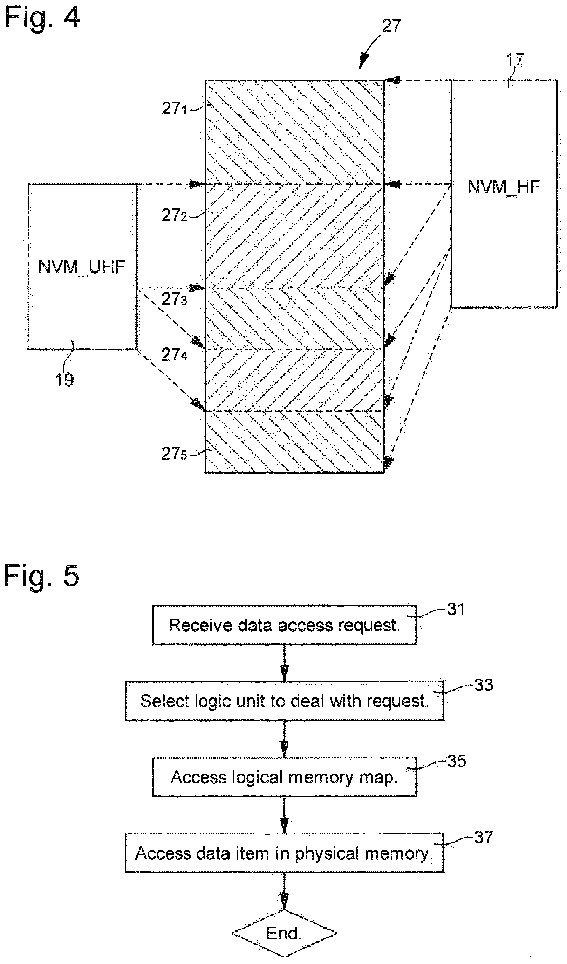

Figure 4 illustrates the memory mapping principle in the connection of the NFC/HF logical memory map 27. As can be seen, in this example the NVM_HF data is stored in the first part 27₁ of the NFC/HF logical memory map 27, followed by the NVM_UHF data in the second part 27₂. The third part 27₃ of the NFC/HF logical memory 27 is again occupied by the NVM_HF data followed again by the NVM_UHF data in the fourth part 27₄. The last part 27₅ of the NFC/HF logical memory map 27 is reserved for the NVM_HF data in this example. Thus, in this example the data from the physical memories NVM_HF 17 and NVM_UHF 19 are interleaved in the NFC/HF logical memory map. The NFC/HF logical memory map 27 may be divided into a static memory structure and a dynamic memory structure. In this example, all the UHF data is stored in the dynamic memory structure. Some of the HF is also stored there. In this example, the static memory structure comprises HF data, but does not comprise any UHF data. As for the EPC/UHF logical memory map 25, also for the NFC/HF logical memory map 27 there are numerous possibilities for implementing the memory mapping.

The memory mapping is typically done in a different manner for the two logical memory maps 25, 27 due to different structures of these two logical memory maps. As both of the physical memories 17, 19 are mapped to both of the logical memory maps 25, 27, it is possible to access both the physical memories for the purpose of writing and/or reading data by using only one control unit 9, 11, in other words, by using only one communication protocol or interface. No priority may be given to either interface. Based on the above, a communication device, an RFID reader in this example, in communication with the transponder 1 may only be able to use one communication protocol, but it could still access data in the both physical memories of the transponder 1. Conversely, only one communication protocol may be used to write data to the transponder, and more specifically to any one of the physical memories of the transponder 1. In some implementations the NVM_HF and NVM_HF cannot be accessed in parallel, but one at a time. Memory access arbitration may be performed on a command basis as they are received over the air interfaces. It is to be noted that the teachings above may be extended to transponders having more than two physical memories. In this case, all or some of the physical memories could be mapped to one or more logical memory maps.

The flow chart of Figure 5 summarises the method of accessing the physical memories 17, 19 of the transponder 1 according to one example. In step 31 the transponder receives a request to access, e.g. to read, a data item located in the physical memory of the transponder. In this example this request is received from an RFID reader. This request is sent by the RFID reader by using one communication protocol only, in this example EPC. In step 33 the logic unit 7 determines which one of the first and second control units 9, 11 is responsible for handling communications according to this particular communication protocol and selects this control unit. In this example, the second control unit 11 is selected for handling this request as this logic unit handles EPC communications. In step 35 the second control unit 11 accesses the logical memory map 25 of its physical memory 19. The logical memory map 25 points the second control unit 11 to read the relevant data from the physical memory 17 and/or the physical memory 19 depending on which physical memory has saved the requested data. In step 37 the data is read from the physical memory. The performance (e.g. speed) of the reading operation depends on the physical memory to be accessed. The memory mapping may be done by the logic unit 7. For example, the NVM_HF 17 may be mapped by the control unit 9, while the NVM_UHF 19 may be mapped by the control unit 11.

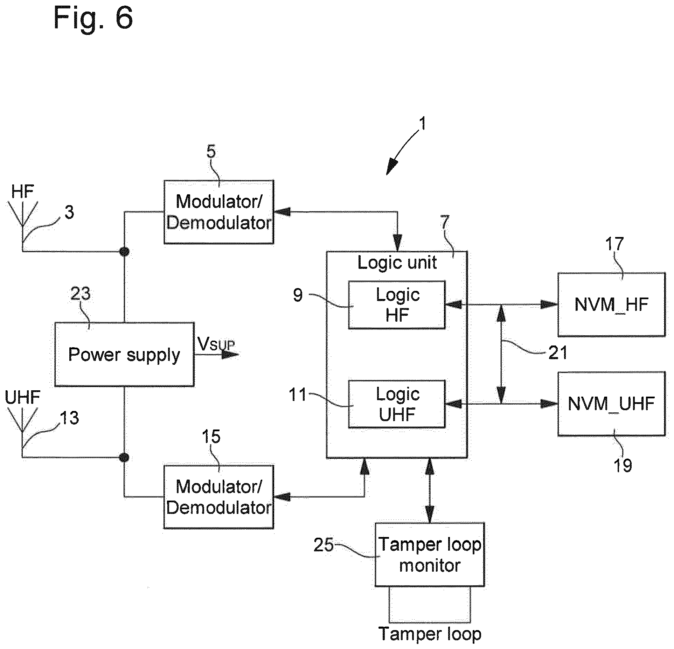

Figure 6 is a block diagram illustrating an exemplary dual-frequency RFID transponder 1, also known as an RFID tag, according to a second embodiment of the present invention. The components of Figure 6 are similar to the above-mentioned components of Figure 1 and are not described again.

In Figure 6, there is only a supplementary tamper loop monitor 25 with a tamper loop generally well known in other devices of the prior art, and connected to the logic unit 7 for the dual-frequency RFID transponder 1. This is mentioned concerning the way how the RFID transponder 1 is performing reading a tamper loop status by connecting the tamper loop monitor 25 to a first control unit 9 of the logic unit 7 for handling communications according to the first protocol, and to a second control unit 11 of the logic unit 7 for handling communications according to the second protocol. The present invention is based on the idea that either one of the control units 9, 11 can access both memories NVM_HF 17, NVM_HF 19. In Figure 6, the tamper loop status can be stored for example in the NVM_UHF memory 19.

So the tamper loop status from the tamper loop monitor 25 can be read by both fields UHF or HF, which is different of the prior art in which the status can be read by only one RF channel. The tamper loop of the tamper loop monitor 25 is with two separate pins, that are not referenced on the chip Vss level. It is possible to detect a tamper event or a historical tamper status, which can be stored in one of the NVM memories 17, 19, and to check an actual event when the dual-frequency transponder is another time activated by one of the fields UHF or HF. The status can be stored in particular in the NVM_UHF memory 19, but it is possible also to be stored in the NVM_HF memory 17 in order to be read according to the first or second communication protocol.

It is to be noted that the fact to write into one of the NVM memories, the status of the tamper loop, when the power is available, is preventing the case when the tamper loop is repaired till next reading. The NVM writing operation is irreversible. Once it is written in one NVM memory, it cannot be written again.

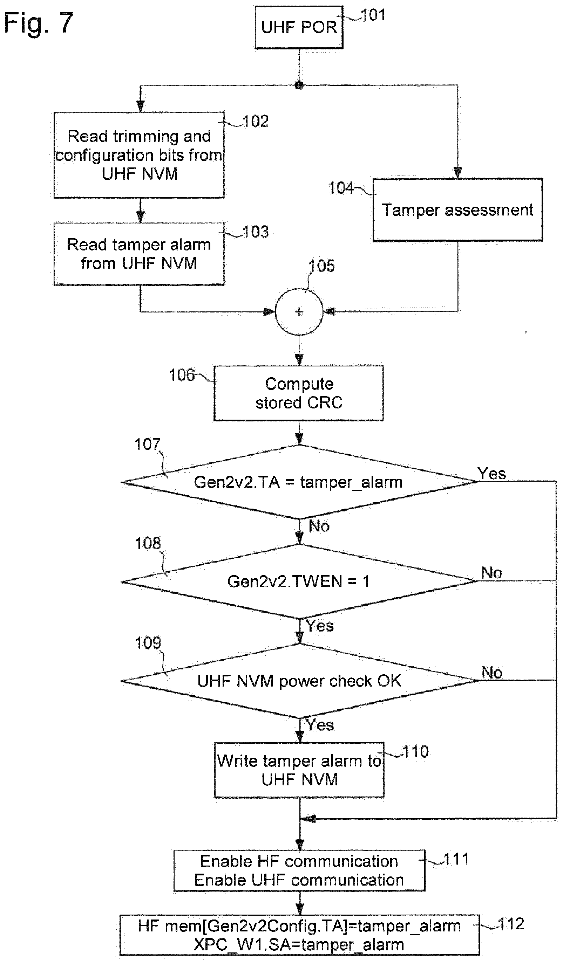

Figure 7 illustrates a flow chart of the tamper monitoring method for the dual-frequency RFID transponder 1. First of all, there is the step 101 to activate the dual-frequency transponder by receiving for example UHF signals and after the conventional power-on reset.

Once the dual-frequency transponder is activated, there is a step 102 to read trimming and configuration bit(s) from the NVM_UHF memory for example followed by the step 103 of reading the status, which is tamper alarm value from NVM_UHF memory. This tamper alarm value or word (Gen2V2.TA) corresponds to the tamper loop previous status. A TA bit is a part of the standard Gen2V2 configuration word. In parallel of steps 102 and 103, there is a step 104 for a tamper assessment. A measurement of the present status of the tamper loop is performed in step 104 to detect if the loop is open or closed. An addition of tamper alarm at the step 103 and the measured tamper at the step 104 is performed in an OR gate 105. This allows detecting if there is a previous tamper event. Preferably the tamper alarm is temporarily stored into a register prior to write it into the NVM_UHF memory. These steps 102 to 105 concern the transponder initialization.

After the initialization part, there is the conventional step 106 to compute a stored CRC, which is a cyclic redundancy check generally for a false detection in a communication system. At the following step 107, there is a check of the tamper alarm value. If it is the same as previous value stored in the NVM_UHF memory the next step is the step 111 explained below. If the tamper alarm bit value is different from the previous value storied in the NVM_UHF memory as Gen2V2.TA bit, then the tamper alarm bit value should be stored in the NVM_UHF memory. At the next step 108, it is checked if a new value can be written into the NVM_UHF memory only if it is allowed by the Gen2V2.TWEN bit. This bit is set by the transponder manufacturer. If yes, in the next step 109, it is checked if a new value can be written into the NVM_UHF memory if there is enough power from the RF field picked-up given that this is a passive RFID transponder. If yes, a new value for the tamper alarm bit is written in the NVM_UHF memory at the step 110. These steps 106 to 110 concern the UHF initialization.

At the step 111, the dual-frequency transponder is ready to communicate with UHF field or HF field. Finally at the step 112, the user can read the tamper alarm bit status from any field (UHF or HF) applied to the transponder. This is due to the fact that the memories are shared as defined in the present invention.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention which is defined by the appended claims.

## Claims

1. A multi-frequency transponder (1) for communicating at a first frequency according to a first communication protocol and at a second frequency according to a second communication protocol, the second frequency being different from the first frequency, the transponder comprising:
- a first physical memory (17) with a first memory structure for storing a first set of data of the first communication protocol;
- a second physical memory (19) with a second memory structure for storing a second set of data, different from the first set of data, of the second communication protocol; and
- a logic unit (7) for accessing the first and second physical memories (17, 19), the logic unit comprising a first control unit (9) for handling communications according to the first protocol, and a second control unit (11) for handling communications according to the second protocol, **characterised in that**
- a mapping memory is configured to store a logical memory map (25, 27) of the first and second physical memories (17, 19), the logical memory map (25, 27) of the first physical memory (17) comprising mapping information for the first control unit (9) to access data items in both the first and second physical memories (17, 19), and the logical memory map of the second physical memory (19) comprising mapping information for the second control unit (11) to access data items in both the first and second physical memories (17, 19) with the first or the second communication protocol only.

2. The multi-frequency transponder (1) according to claim 1, wherein the transponder (1) is a radio-frequency identification tag.

3. The multi-frequency transponder (1) according to claim 1 or 2, wherein the first frequency is a high frequency and the second frequency is an ultra-high frequency.

4. The multi-frequency transponder (1) according to any one of the preceding claims, wherein the first communication protocol is a near field communication protocol, while the second communication protocol is an electronic product code protocol.

5. The multi-frequency transponder (1) according to claim 4, wherein the data storage capacity of the first physical memory (17) is larger than the data storage capacity of the second physical memory (19).

6. The multi-frequency transponder (1) according to claim 4 or 5, wherein the logical memory map (27) of the first physical memory (17) comprises a static memory part and a dynamic memory part; and wherein at least some of the storage space of the dynamic memory part is configured for storing data items of the second physical memory (19).

7. The multi-frequency transponder (1) according to any one of claims 4 to 6, wherein the logical memory map (25) of the second physical memory (19) comprises the following memory bank items: "reserved", "EPC", "TID" and "user"; and wherein at least some of the storage space of the memory bank "user" is configured for storing data items of the first physical memory (17).

8. The multi-frequency transponder (1) according to any one of the preceding claims, wherein the transponder further comprises a memory bus (21) for data communication between the first and second physical memories (17, 19).

9. The multi-frequency transponder (1) according to any one of the preceding claims, wherein the transponder further comprises a power supply (23).

10. The multi-frequency transponder (1) according to any one of the preceding claims, wherein the information comprises data in the first and second physical memories (17, 19), and wherein the data in the first physical memory (17) occupies one continuous space in the logical memory map (25, 27), while the data in the second physical memory (19) occupies another continuous space in the logical memory map (25, 27).

11. The multi-frequency transponder (1) according to any one of claims 1 to 10, wherein the information comprises data from the first and second physical memories (17, 19), and wherein the data in the first and second physical memories (17, 19) are interleaved in the logical memory map (25, 27).

12. The multi-frequency transponder (1) according to any one of the preceding claims, wherein accessing comprises reading and/or writing data.

13. A memory access method for a multi-frequency transponder (1) arranged to communicate at a first frequency according to a first communication protocol and at a second frequency according to a second communication protocol, the second frequency being different from the first frequency, the transponder comprising: a physical memory comprising a first physical memory (17) assigned to the first communication protocol, and a second physical memory (19) assigned to the second communication protocol; a logic unit (7) comprising a first control unit (9) for handling communications according to the first communication protocol, and a second control unit (11) for handling communications according to the second communication protocol, the method comprising:
- receiving (31) a request according to a given communication protocol to access the physical memory (17, 19) of the transponder (1);
- selecting (33) the first or second control unit (9, 11), which is responsible for handling communications according to the given communication protocol;
- accessing (35) by the selected control unit (9, 11) a logical memory map of the physical memory (17, 19) assigned to the given communication protocol for accessing the physical memory (17, 19); and
- accessing (37) the physical memory (17, 19) by the selected control unit (9, 11) through the logical memory map, **characterised by**
a mapping memory of the transponder configured to store a logical memory map (25, 27) of the first and second physical memories (17, 19), the logical memory map (25, 27) of the first physical memory (17) comprising mapping information for the first control unit (9) to access data items in both the first and second physical memories (17, 19), and the logical memory map of the second physical memory (19) comprising mapping information for the second control unit (11) to access data items in both the first and second physical memories (17, 19) with the first or the second communication protocol only.

## Patentansprüche

1. Mehrfrequenztransponder (1) zum Kommunizieren auf einer ersten Frequenz gemäß einem ersten Kommunikationsprotokoll und auf einer zweiten Frequenz gemäß einem zweiten Kommunikationsprotokoll, wobei die zweite Frequenz von der ersten Frequenz verschieden ist, wobei der Transponder umfasst:
- einen ersten physischen Speicher (17) mit einer ersten Speicherstruktur zum Speichern eines ersten Datensatzes des ersten Kommunikationsprotokolls;
- einen zweiten physischen Speicher (19) mit einer zweiten Speicherstruktur zum Speichern eines von dem ersten Datensatz verschiedenen zweiten Datensatzes des zweiten Kommunikationsprotokolls; und
- eine Logikeinheit (7) zum Zugreifen auf den ersten und den zweiten physischen Speicher (17, 19), wobei die Logikeinheit eine erste Steuereinheit (9) zum Verarbeiten von Kommunikationen gemäß dem ersten Protokoll und eine zweite Steuereinheit (11) zum Verarbeiten von Kommunikationen gemäß dem zweiten Protokoll umfasst, **dadurch gekennzeichnet, dass**
- ein Zuordnungsspeicher konfiguriert ist, eine logische Speicherzuordnung (25, 27) des ersten und des zweiten physischen Speichers (17, 19) zu speichern, wobei die logische Speicherzuordnung (25, 27) des ersten physischen Speichers (17) Zuordnungsinformationen für die erste Steuereinheit (9) umfasst, um auf Datenelemente sowohl in dem ersten als auch in dem zweiten physischen Speicher (17, 19) zuzugreifen, und die logische Speicherzuordnung des zweiten physischen Speichers (19) Zuordnungsinformationen für die zweite Steuereinheit (11) umfasst, um auf Datenelemente sowohl in dem ersten als auch in dem zweiten physischen Speicher (17, 19) nur mit dem ersten oder dem zweiten Kommunikationsprotokoll zuzugreifen.

2. Mehrfrequenztransponder (1) nach Anspruch 1, wobei der Transponder (1) ein Hochfrequenzidentifikationsetikett ist.

3. Mehrfrequenztransponder (1) nach Anspruch 1 oder 2, wobei die erste Frequenz eine Hochfrequenz ist und die zweite Frequenz eine Ultrahochfrequenz ist.

4. Mehrfrequenztransponder (1) nach einem der vorhergehenden Ansprüche, wobei das erste Kommunikationsprotokoll ein Nahfeldkommunikationsprotokoll ist, während das zweite Kommunikationsprotokoll ein Protokoll eines elektronischen Produktcodes ist.

5. Mehrfrequenztransponder (1) nach Anspruch 4, wobei die Datenspeicherkapazität des ersten physischen Speichers (17) größer als die Datenspeicherkapazität des zweiten physischen Speichers (19) ist.

6. Mehrfrequenztransponder (1) nach Anspruch 4 oder 5, wobei die logische Speicherzuordnung (27) des ersten physischen Speichers (17) einen statischen Speicherteil und einen dynamischen Speicherteil umfasst; und wobei zumindest ein Teil des Speicherraums des dynamischen Speicherteils zum Speichern von Datenelementen des zweiten physischen Speichers (19) konfiguriert ist.

7. Mehrfrequenztransponder (1) nach einem der Ansprüche 4 bis 6, wobei die logische Speicherzuordnung (25) des zweiten physischen Speichers (19) die folgenden Speicherbankelemente umfasst: "reserviert", "EPC", "TID" und "Anwender"; und wobei zumindest ein Teil des Speicherraums der Speicherbank "Anwender" zum Speichern von Datenelementen des ersten physischen Speichers (17) konfiguriert ist.

8. Mehrfrequenztransponder (1) nach einem der vorhergehenden Ansprüche, wobei der Transponder ferner einen Speicherbus (21) für eine Datenkommunikation zwischen dem ersten und dem zweiten physischen Speicher (17, 19) umfasst.

9. Mehrfrequenztransponder (1) nach einem der vorhergehenden Ansprüche, wobei der Transponder ferner eine Stromversorgung (23) umfasst.

10. Mehrfrequenztransponder (1) nach einem der vorhergehenden Ansprüche, wobei die Informationen Daten in dem ersten und dem zweiten physischen Speicher (17, 19) umfassen und wobei die Daten in dem ersten physischen Speicher (17) einen durchgehenden Raum in der logischen Speicherzuordnung (25, 27) belegen, wobei die Daten in dem zweiten physischen Speicher (19) einen anderen durchgehenden Raum in der logischen Speicherzuordnung (25, 27) belegen.

11. Mehrfrequenztransponder (1) nach einem der Ansprüche 1 bis 10, wobei die Informationen Daten von dem ersten und dem zweiten physischen Speicher (17, 19) umfassen und wobei die Daten in dem ersten und dem zweiten physischen Speicher (17, 19) in der logischen Speicherzuordnung (25, 27) verschachtelt sind.

12. Mehrfrequenztransponder (1) nach einem der vorhergehenden Ansprüche, wobei das Zugreifen das Lesen und/oder Schreiben von Daten umfasst.

13. Speicherzugriffsverfahren für einen Mehrfrequenztransponder (1), der ausgelegt ist, auf einer ersten Frequenz gemäß einem ersten Kommunikationsprotokoll und auf einer zweiten Frequenz gemäß einem zweiten Kommunikationsprotokoll zu kommunizieren, wobei die zweite Frequenz von der ersten Frequenz verschieden ist, wobei der Transponder umfasst: einen physischen Speicher, der einen ersten physischen Speicher (17), der dem ersten Kommunikationsprotokoll zugewiesen ist, und einen zweiten physischen Speicher (19), der dem zweiten Kommunikationsprotokoll zugewiesen ist; eine Logikeinheit (7), die eine erste Steuereinheit (9) zum Verarbeiten von Kommunikationen gemäß dem ersten Kommunikationsprotokoll und eine zweite Steuereinheit (11) zum Verarbeiten von Kommunikationen gemäß dem zweiten Kommunikationsprotokoll umfasst, wobei das Verfahren umfasst:
- Empfangen (31) einer Anforderung gemäß einem gegebenen Kommunikationsprotokoll, um auf den physischen Speicher (17, 19) des Transponders (1) zuzugreifen;
- Auswählen (33) der ersten oder der zweiten Steuereinheit (9, 11), die für das Verarbeiten von Kommunikationen gemäß dem gegebenen Kommunikationsprotokoll verantwortlich ist;
- Zugreifen (35) mittels der ausgewählten Steuereinheit (9, 11) auf eine logische Speicherzuordnung des physischen Speichers (17, 19), die dem gegebenen Kommunikationsprotokoll zum Zugreifen auf den physischen Speicher (17, 19) zugewiesen ist; und
- Zugreifen (37) auf den physischen Speicher (17, 19) durch die ausgewählte Steuereinheit (9, 11) über die logische Speicherzuordnung, **gekennzeichnet durch**
einen Zuordnungsspeicher des Transponders, der konfiguriert ist, eine logische Speicherzuordnung (25, 27) des ersten und des zweiten physischen Speichers (17, 19) zu speichern, wobei die logische Speicherzuordnung (25, 27) des ersten physischen Speichers (17) Zuordnungsinformationen für die erste Steuereinheit (9) umfasst, um auf Datenelemente sowohl in dem ersten als auch in dem zweiten physischen Speicher (17, 19) zuzugreifen, und die logische Speicherzuordnung des zweiten physischen Speichers (19) Zuordnungsinformationen für die zweite Steuereinheit (11) umfasst, um auf Datenelemente sowohl in dem ersten als auch in dem zweiten physischen Speicher (17, 19) nur mit dem ersten oder dem zweiten Kommunikationsprotokoll zuzugreifen.

## Revendications

1. Transpondeur multifréquence (1) pour communiquer à une première fréquence selon un premier protocole de communications et à une deuxième fréquence selon un deuxième protocole de communications, la deuxième fréquence étant différente de la première fréquence, le transpondeur comprenant :
- une première mémoire physique (17) avec une première structure de mémoire pour mémoriser un premier ensemble de données du premier protocole de communications ;
- une deuxième mémoire physique (19) avec une deuxième structure de mémoire pour mémoriser un deuxième ensemble de données, différent du premier ensemble de données, du deuxième protocole de communications ; et
- une unité logique (7) pour l'accès aux première et deuxième mémoires physiques (17, 19), l'unité logique comprenant une première unité de commande (9) pour la gestion de communications selon le premier protocole, et une deuxième unité de commande (11) pour la gestion de communications selon le deuxième protocole, **caractérisé en ce que**
- une mémoire de cartographie est configurée pour mémoriser une carte de mémoire logique (25, 27) des première et deuxième mémoires physiques (17, 19), la carte de mémoire logique (25, 27) de la première mémoire physique (17) comprenant des informations de cartographie pour la première unité de commande (9) pour accéder à des éléments de données dans à la fois les première et deuxième mémoires physiques (17, 19), et la carte de mémoire logique de la deuxième mémoire physique (19) comprenant des informations de cartographie pour la deuxième unité de commande (11) pour accéder à des éléments de données dans à la fois les première et deuxième mémoires physiques (17, 19) avec uniquement le premier ou deuxième protocole de communications.

2. Transpondeur multifréquence (1) selon la revendication 1, dans lequel le transpondeur (1) est une étiquette d'identification radiofréquence.

3. Transpondeur multifréquence (1) selon la revendication 1 ou 2, dans lequel la première fréquence est une haute fréquence et la deuxième fréquence est une ultra-haute fréquence.

4. Transpondeur multifréquence (1) selon l'une quelconque des revendications précédentes, dans lequel le premier protocole de communications est un protocole de communications en champ proche, alors que le deuxième protocole de communications est un protocole de code de produit électronique.

5. Transpondeur multifréquence (1) selon la revendication 4, dans lequel la capacité de mémorisation de données de la première mémoire physique (17) est plus grande que la capacité de mémorisation de données de la deuxième mémoire physique (19).

6. Transpondeur multifréquence (1) selon la revendication 4 ou 5, dans lequel la carte de mémoire logique (27) de la première mémoire physique (17) comprend une partie de mémoire statique et une partie de mémoire dynamique ; et dans lequel au moins une portion de l'espace de mémorisation de la partie de mémoire dynamique est configurée pour mémoriser des éléments de données de la deuxième mémoire physique (19).

7. Transpondeur multifréquence (1) selon l'une quelconque des revendications 4 à 6, dans lequel la carte de mémoire logique (25) de la deuxième mémoire physique (19) comprend les éléments de banque de mémoire suivants : « réservé », « EPC », « TID » et « utilisateur » ; et dans lequel au moins une portion de l'espace de mémorisation de la banque de mémoire « utilisateur » est configurée pour mémoriser des éléments de données de la première mémoire physique (17).

8. Transpondeur multifréquence (1) selon l'une quelconque des revendications précédentes, dans lequel le transpondeur comprend en outre un bus de mémoire (21) pour une communication de données entre les première et deuxième mémoires physiques (17, 19).

9. Transpondeur multifréquence (1) selon l'une quelconque des revendications précédentes, dans lequel le transpondeur comprend en outre une alimentation électrique (23).

10. Transpondeur multifréquence (1) selon l'une quelconque des revendications précédentes, dans lequel les informations comprennent des données dans les première et deuxième mémoires physiques (17, 19), et dans lequel les données dans la première mémoire physique (17) occupent un espace continu dans la carte de mémoire logique (25, 27), alors que les données dans la deuxième mémoire physique (19) occupent un autre espace continu dans la carte de mémoire logique (25, 27).

11. Transpondeur multifréquence (1) selon l'une quelconque des revendications 1 à 10, dans lequel les informations comprennent des données des première et deuxième mémoires physiques (17, 19), et dans lequel les données dans les première et deuxième mémoires physiques (17, 19) sont entrelacées dans la carte de mémoire logique (25, 27).

12. Transpondeur multifréquence (1) selon l'une quelconque des revendications précédentes, dans lequel l'accès comprend la lecture et/ou l'écriture de données.

13. Procédé d'accès de mémoire pour un transpondeur multifréquence (1) agencé pour communiquer à une première fréquence selon un premier protocole de communications et à une deuxième fréquence selon un deuxième protocole de communications, la deuxième fréquence étant différente de la première fréquence, le transpondeur comprenant : une mémoire physique comprenant une première mémoire physique (17) assignée au premier protocole de communications, et une deuxième mémoire physique (19) assignée au deuxième protocole de communications ; une unité logique (7) comprenant une première unité de commande (9) pour la gestion de communications selon le premier protocole de communications, et une deuxième unité de commande (11) pour la gestion de communications selon le deuxième protocole de communications, le procédé comprenant :
- la réception (31) d'une demande selon un protocole de communications donné pour accéder à la mémoire physique (17, 19) du transpondeur (1) ;
- la sélection (33) de la première ou deuxième unité de commande (9, 11), qui est responsable de la gestion de communications selon le protocole de communications donné ;
- l'accès (35), par l'unité de commande (9, 11) sélectionnée, à une carte de mémoire logique de la mémoire physique (17, 19) assignée au protocole de communications donné pour l'accès à la mémoire physique (17, 19); et
- l'accès (37) à la mémoire physique (17, 19) par l'unité de commande (9, 11) sélectionnée par l'intermédiaire de la carte de mémoire logique, **caractérisé par**
une mémoire de cartographie du transpondeur configurée pour la mémorisation d'une carte de mémoire logique (25, 27) des première et deuxième mémoires physiques (17, 19), la carte de mémoire logique (25, 27) de la première mémoire physique (17) comprenant des informations de cartographie pour la première unité de commande (9) pour accéder à des éléments de données dans à la fois les première et deuxième mémoires physiques (17, 19), et la carte de mémoire logique de la deuxième mémoire physique (19) comprenant des informations de cartographie pour la deuxième unité de commande (11) pour accéder à des éléments de données dans à la fois les première et deuxième mémoires physiques (17, 19) avec uniquement le premier ou deuxième protocole de communications.
